# EUROPÄISCHE PATENTSCHRIFT

(11) **EP 1 065 225 B1**
(45) Veröffentlichungstag und Bekanntmachung des Hinweises auf die Patenterteilung: **05.09.2001**
(21) Anmeldenummer: 00111072.5
(22) Anmeldetag: 02.06.2000
(51) Int. Cl.: C08F 212/04, C09D 125/10, C04B 24/26

(54) **Verfahren zur Minderung der Geruchsemission wässriger Vinylaromat-1,3-Dien-Copolymerisat-dispersionen**
Method for the reduction of odour emissions of aqueous dispersions of copolymers of vinylaromatic monomers and 1,3 diene
Procédé pour réduire les odeurs émises par les dispersions aqueuses de copolymères de monomères vinylaromatiques et de 1,3 dienes

(30) Priorität: 24.06.1999 DE 19928934
(43) Veröffentlichungstag der Anmeldung: 03.01.2001
(73) Patentinhaber: Wacker Polymer Systems GmbH & Co. KG, 84489 Burghausen (DE)
(72) Erfinder: Mayer, Theo, Dr., 84387 Julbach (DE); Ball, Peter, Dr., 84547 Emmerting (DE)
(74) Vertreter: Schuderer, Michael, Dr.

(56) Entgegenhaltungen:
- WO-A-00/31147
- FR-A- 2 117 526

## Beschreibung

Die Erfindung betrifft ein Verfahren zur Minderung der Geruchsemission von wässrigen Vinylaromat-1,3-Dien-Copolymerisatdispersionen sowie von Redispersionspulvern, die durch Trocknung derartiger Polymerisatdispersionen erhältlich sind.

Wässrige Polymerdispersionen auf der Basis von Vinylaromat-1,3-Dien-Copolymerisat-Dispersionen und daraus, in der Regel durch Sprühtrocknung hergestellte Redispersionspulver, finden vor allem im Baubereich als Vergütungsmittel in zementären und nicht-zementären, pulverförmigen Fertigmischungen Verwendung. Ein Problem derartiger Dispersionen und Redispersionspulver besteht darin, daß sie in der Regel noch flüchtige geruchsintensive Bestandteile wie z.B. Mercaptane, die als Molekulargewichtsregler bei der Polymerisation dienen, Ammoniak, der zur Neutralisation verwendet wird, Restmonomere, nicht-polymerisierbare Verunreinigungen der Monomere, flüchtige Reaktionsprodukte der Monomere, die unter den Reaktionsbedingungen gebildet werden, sowie flüchtige Abbauprodukte der Polymeren enthalten. Der resultierende Geruch wird sowohl von den Herstellern, als auch von den Verbrauchern als unangenehm empfunden, weshalb ein Bedarf an desodorierten wässrigen Polymerdispersionen sowie desodorierten Redispersionspulvern besteht.

Bekanntlich werden Polymerisatdispersionen durch physikalische oder chemische Nachbehandlung desodoriert. Als physikalische Verfahren sind beispielsweise destillative Verfahren, insbesondere die Wasserdampfdestillation, sowie das Abstreifen mit inerten Gasen zu nennen, wie sie beispielsweise in der EP-A 327006 (US-A 5708077) erwähnt sind. Nachteilig an diesem Verfahren ist, daß viele Dispersionen für diese Art der Desodorierung nicht hinreichend stabil sind, so daß Koagulatbildung auftritt, was eine aufwendige Filtration vor der weiteren Verwendung zur Folge hat. Ein weiterer Nachteil des Verfahrens ist, daß es zwar den Anteil an flüchtigen Stoffen in der wässrigen Polymerdispersion zu reduzieren vermag, jedoch die Frage der Entsorgung dieser Stoffe offen läßt.

Es ist auch bekannt, daß Polymerdispersionen durch chemische Nachbehandlung von geruchsintensiven Monomeren befreit werden können. Beispielsweise wird in der DE-A 4419518 beschrieben, daß durch radikalische Nachpolymerisation unter Einwirkung von Redoxinitiatorsystemen, chemisch die Absenkung der Restmonomere erfolgen kann. Die US-A 4529753 beschreibt ein Verfahren, womit der Gehalt an Restmonomeren von wässrigen Polymerisatdispersionen mittels nach Beendigung der Hauptpolymerisationsreaktion sich anschließender radikalischer Nachpolymerisation, durch Einwirkung von besonderen radikalischen Redoxinitiatorsystemen, reduziert werden kann. Solche Redoxinitiatorsysteme umfassen wenigstens ein Oxidationsmittel, wenigstens ein Reduktionsmittel sowie ein oder mehrere in verschiedenen Wertigkeitsstufen auftretende Übergangsmetallionen.

Nachteilig an den oben empfohlenen Verfahren ist jedoch, daß sie angewendet in geruchsintensiven Polymerdispersionen wie beispielsweise Styrol-Butadien-Dispersionen zwar teilweise den Restmonomergehalt senken können, allerdings den durch Styrol und geruchsintensive Nebenprodukte, beispielsweise Mercaptane, nicht-polymerisierbare Verunreinigungen der Monomere, flüchtige Reaktionsprodukte der Monomere, flüchtige Abbauprodukte der Polymere, bedingten unangenehmen Geruch nicht wirksam zu mindern vermögen.

Die DE-A 19728997 beschreibt desodorierte wässrige Polymerdispersionen, die erhältlich sind durch Zugabe des Zinksalzes der Ricinolsäure und/oder des Zinksalzes der Abietinsäure bzw. analoger Harzsäuren und/oder weiterer Zinksalze anderer gesättigter oder ungesättigter hydroxylierter Fettsäuren mit 16 und mehr C-Atomen. Nachteilig an dieser Verfahrensweise ist jedoch, daß sie aufgrund zusätzlicher Elektrolytbelastung die Stabilität der wässrigen Polymerisatdispersion beeinträchtigt.

Die adsorbierende Wirkung von Adsorbenzien hinsichtlich flüchtiger organischer Substanzen ist bekannt. Die WO-A 98/11156 beschreibt ein Verfahren, wonach die Zugabe bereits geringer Mengen (0.1 bis 20 Gew.-% bezogen auf polymere Bestandteile der Dispersion) Aktivkohle in Polymerisatdispersionen die geruchsbildenden, flüchtigen Verunreinigungen so stark zu binden mag, daß diese sowohl in den Polymerdispersionen als auch in den unter Verwendung der Polymerisatdispersionen hergestellten Erzeugnissen praktisch nicht mehr wahrgenommen werden. Nachteilig bei diesem Verfahren ist, daß für eine wirksame Geruchsminderung die Verweilzeit der Aktivkohle bis zu mehreren Stunden beträgt und anschließend in der Regel (insbesondere für pigmentierte Systeme, z.B. Dispersionsfarben) zur weiteren Verwendung die Dispersion gefiltert werden muß. Dies ist sowohl aus ökonomischer Sicht als auch ökologischer Sicht von Nachteil, zumal die Frage der Entsorgung der abfiltrierten kontaminierten Aktivkohle offen bleibt.

Wässrige Styrol-Butadien-Polymerdispersionen sind zweiphasige Systeme, die aus einer wässrigen Phase und einer Polymerphase bestehen. Den geruchsintensiven Bestandteilen stehen sowohl die dispergierten Polymerisatteilchen als auch das wässrige Dispergiermedium als möglicher Aufenthaltsort zur Verfügung. Zwischen diesen beiden Phasen stellt sich ein Verteilungsgleichgewicht ein. Der Nachteil der bekannten Methoden zur Absenkung des Anteils an flüchtigen Bestandteilen wässriger Polymerisatdispersionen besteht nun darin, daß sie im wesentlichen entweder nur das wässrige Dispergiermedium oder nur die Polymerisatteilchen erfassen. Das heißt, eine signifikante Gesamtabsenkung des Anteils an flüchtigen Bestandteilen der wässrigen Polymerisatdispersion wird im wesentlichen diffusionskontrolliert erfolgen (wiederholte Einstellung des Verteilungsgleichgewicht), worauf vermutlich die nicht befriedigende Geschwindigkeit der Absenkung des Anteils an flüchtigen Geruchsträger in wässrigen Polymerisatdispersionen bei Anwendung der bekannten Verfahren zurückgeführt werden kann.

Aus der DE-A 19853421 ist ein Verfahren zur Minderung der Geruchsemission wässriger Vinylaromat-1,3-Dien-Copolymerisat-Dispersionen bekannt, bei dem gegen Ende der Copolymerisation vorzugsweise Acrylsäureester-Monomere zugegeben werden. Mit dieser Verfahrensweise können aber nicht alle Geruchsträger beseitigt werden; insbesondere werden offenbar thermische Zersetzungsprodukte der Vinylaromaten und Diene nicht beseitigt.

Überraschenderweise wurde gefunden, daß eine Desodorierung sowohl der in der wässrigen Phase als auch der in der Polymerphase befindlichen Geruchsträger erfolgt, wenn gegen Ende der Hauptpolymerisation, dem Reaktionsgemisch Alkylester von ungesättigten Carbonsäuren und Vinylester von aliphatischen Carbonsäuren in einem Schritt oder in zwei aufeinanderfolgenden Schritten zugegeben werden.

Gegenstand der Erfindung ist ein Verfahren zur Minderung der Geruchsemission wässriger Vinylaromat-1,3-Dien-Copolymerisatdispersionen und daraus durch Trocknung erhältlicher Redispersionspulver, durch Emulsionspolymerisation eines Gemisches enthaltend mindestens einen Vinylaromaten und mindestens ein 1,3-Dien in Gegenwart einer oder mehrerer oberflächenaktiven Substanzen und gegebenenfalls Trocknung der damit erhaltenen Polymerdispersion, dadurch gekennzeichnet, daß gegen Ende der Polymerisation, wenn der Gesamtgehalt der wässrigen Polymerisatdispersion an freien Monomeren im Bereich ≥ 0 bis ≤ 20 Gew.-% liegt, 0.01 bis 15.0 Gew.-% ein oder mehrere Monomere aus der Gruppe der verzweigten oder unverzweigten Alkylester mit 1 bis 8 C-Atomen im Alkylrest von einfach ungesättigten Mono- oder Dicarbonsäuren, und 0.01 bis 15.0 Gew.-% ein oder mehrere Monomere aus der Gruppe der Vinylester verzweigter oder unverzweigter aliphatischer Carbonsäuren mit 1 bis 10 C-Atomen in einem Schritt oder in zwei aufeinanderfolgenden Schritten zugegeben werden, und die Angaben in Gew.-% jeweils auf den Polymerisatgehalt der Dispersion bezogen sind.

Geeignete Vinylaromaten sind Styrol und Methylstyrol, vorzugsweise wird Styrol copolymerisiert. Beispiele für 1,3-Diene sind 1,3-Butadien und Isopren, bevorzugt wird 1,3-Butadien. Im allgemeinen werden 20 bis 80 Gew.-% Vinylaromat und 20 bis 80 Gew.-% 1,3-Dien copolymerisiert, wobei gegebenenfalls noch weitere Monomere copolymerisiert werden können, und sich die Angaben in Gewichtsprozent jeweils auf 100 Gew.-% aufaddieren.

Beispiele für weitere Monomere, welche gegebenenfalls in einer Menge von 0.1 bis 30 Gew.-% copolymerisiert werden, sind mit Vinylaromaten und 1,3-Dienen copolymerisierbare Monomere wie Ethylen, Vinylchlorid, (Meth)acrylsäureester von Alkoholen mit 1 bis 15 C-Atomen, gegebenenfalls Vinylester von unverzweigten oder verzweigten Carbonsäuren mit 1 bis 15 C-Atomen, oder Hilfsmonomere wie ethylenisch ungesättigte Mono- und Dicarbonsäuren, ethylenisch ungesättigte Carbonsäureamide und - nitrile, Mono- und Diester der Fumarsäure und Maleinsäure, Maleinsäureanhydrid, ethylenisch ungesättigte Sulfonsäuren, mehrfach ethylenisch ungesättigte Comonomere oder nachvernetzende Comonomere, epoxidfunktionelle Comonomere, siliciumfunktionelle Comonomere, Monomere mit Hydroxy- oder CO-Gruppen. Geeignete Comonomere und Hilfsmonomere sind beispielsweise in der WO-A 99/16794 beschrieben.

Bevorzugte Alkylester aus der Gruppe der verzweigten oder unverzweigten Alkylester mit 1 bis 8 C-Atomen im Alkylrest von einfach ungesättigten Mono- oder Dicarbonsäuren sind die Alkylester der Acrylsäure, Methacrylsäure, Fumarsäure, Maleinsäure oder Itaconsäure oder deren Mischungen. Besonders bevorzugt sind Methylmethacrylat, Methylacrylat, n-Butylmethacrylat, n-Butylacrylat, Ethylmethacrylat, Ethylacrylat, 2-Ethylhexylmethacrylat, 2-Ethylhexylacrylat, Di-iso-Propylfumarat, Diethylfumarat oder deren Mischungen. Am meisten bevorzugt sind Methylmethacrylat und n-Butylacrylat.

Bevorzugte Vinylester aus der Gruppe der Vinylester verzweigter oder unverzweigter aliphatischer Carbonsäuren mit 1 bis 10 C-Atomen sind Vinylacetat, Vinylpivalat, Vinylethylhexanoat, Vinylester von alpha-verzweigten Monocarbonsäuren mit 9 bis 10 C-Atomen wie VeoVa 9 und VeoVa 10 (Handelsnamen der Fa. Shell). Besonders bevorzugt ist Vinylacetat.

Die Herstellung nach dem Emulsionspolymerisationsverfahren, erfolgt bei 20°C bis 95°C, vorzugsweise 60°C bis 95°C. Die Initiierung der Polymerisation erfolgt mit den für die Emulsionspolymerisation gebräuchlichen Initiatoren oder Redox-Initiator-Kombinationen, beispielsweise Hydroperoxide wie tert.-Butylhydroperoxid, tert.-Butylperoxopivalat, Cumolhydroperoxid, Isopropylbenzolmonohydroperoxid, Azoverbindungen wie Azobisisobutyronitril, anorganische Initiatoren wie die Natrium-, Kalium- und Ammoniumsalze der Peroxodischwefelsäure. Die genannten Initiatoren werden im allgemeinen in einer Menge von 0.05 bis 3 Gew.-%, bezogen auf das Gesamtgewicht der Monomere, eingesetzt. Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate wie Natriumhydroxymethansulfinat (Rongalith), und Ascorbinsäure. Die Reduktionsmittelmenge beträgt vorzugsweise 0.01 bis 5.0 Gew.-%, bezogen auf das Gesamtgewicht der Monomere.

Die Stabilisierung des Polymerisationsansatzes erfolgt mittels Schutzkolloiden und/oder Emulgatoren. Geeignete Schutzkolloide, sind vollverseifte und teilverseifte Polyvinylacetate. Geeignet sind auch teilverseifte, hydrophobierte Polyvinylacetate, wobei die Hydrophobierung beispielsweise durch Copolymerisation mit Isopropenylacetat, Ethylen oder Vinylestern von gesättigten alpha-verzweigten Monocarbonsäuren mit 5 bis 11 C-Atomen erfolgen kann. Weitere Beispiele sind Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere, Dextrine wie Gelbdextrin.

Bevorzugt werden die genannten teilverseiften Polyvinylacetate und teilverseiften, hydrophobierten Polyvinylacetate. Besonders bevorzugt werden teilverseifte Polyvinylacetate mit einem Hydrolysegrad von 80 bis 95 Mol%, und einer Höpplerviskosität (4 %-ige wässrige Lösung, DIN 53015, Methode nach Höppler bei 20°C) von 1 bis 30 mPas, vorzugsweise 2 bis 15 mPas.

Geeignete Emulgatoren sind anionische oder nichtionische Emulgatoren oder deren Gemische, beispielweise:
1) Alkylsulfate, besonders solche mit einer Kettenlänge von 8 bis 18 C-Atomen, Alkyl- und Alkylarylethersulfate mit 8 bis 18 C-Atomen im hydrophoben Rest und 1 bis 50 Ethylenoxideinheiten.
2) Sulfonate, besonders Alkylsulfonate mit 8 bis 18 C-Atomen, Alkylarylsulfonate mit 8 bis 18 C-Atomen, Ester und Halbester der Sulfobernsteinsäure mit einwertigen Alkoholen oder Alkylphenolen mit 4 bis 15 C-Atomen im Alkylrest; gegebenenfalls können diese Alkohole oder Alkylphenole auch mit 1 bis 40 Ethylenoxideinheiten ethoxyliert sein.
3) Phosphorsäureteilester und deren Alkali- und Ammoniumsalze, besonders Alkyl- und Alkylarylphosphate mit 8 bis 20 C-Atomen im organischen Rest, Alkylether- und Alkylaryletherphosphate mit 8 bis 20 C-Atomen im Alkyl bzw. Alkylarylrest und 1 bis 50 EO-Einheiten.
4) Alkylpolyglykolether bevorzugt mit 8 bis 40 EO-Einheiten und Alkylresten mit 8 bis 20 C-Atomen.
5) Alkylarylpolyglykolether bevorzugt mit 8 bis 40 EO-Einheiten und 8 bis 20 C-Atomen in den Alkyl-und Arylresten.
6) Ethylenoxid/Propylenoxid (EO/PO)-Blockcopolymere bevorzugt mit 8 bis 40 EO- bzw. PO-Einheiten.

Die oberflächenaktiven Schutzkolloide und Emulgatoren werden im allgemeinen in einer Menge von insgesamt 1 bis 15 Gew.-%, bezogen auf das Gesamtgewicht der Monomere, bei der Polymerisation zugesetzt. Vorzugsweise wird der Anteil der oberflächenaktiven Substanzen dabei vorgelegt oder teilweise vorgelegt und der Rest nach der Initiierung der Polymerisation zudosiert. Die Vinylaromat-, 1,3-Dien-Monomere sowie gegebenenfalls weitere Comonomere und Hilfsmonomere werden vorzugsweise insgesamt vorgelegt oder in Anteilen vorgelegt und der Rest nach der Initiierung der Polymerisation zudosiert.

Die genannten Alkylester und Vinylester können als solche oder in wässriger Emulsion, getrennt oder im Gemisch, zugegeben werden, wobei die Zugabemenge jeweils bevorzugt 0.1 bis 5 Gew.-%, bezogen auf den Polymerisatgehalt der Dispersion, beträgt. Die Zugabe der Alkylester und Vinylester erfolgt im allgemeinen gegen Ende der Polymerisation, wenn der Gesamtgehalt der wässrigen Polymerisatdispersion an freien Monomeren im Bereich ≥ 0 bis ≤ 20 Gew.-% liegt, oder anders ausgedrückt der Umsatz der gesamten eingesetzten Monomermenge im Bereich zwischen ≥ 80 % und ≤ 100 % liegt. Vorzugsweise erfolgt die Zugabe der Alkylester und Vinylester, wenn der Gesamtgehalt der wässrigen Polymerisatdispersion an freien Monomeren, bezogen auf den Polymerisatgehalt der Dispersion, bis auf den Bereich 5 bis 15 Gew.-% abgesunken ist, was einem Umsatz von 85 bis 95 % entspricht. Die Zugabe kann batchweise oder mittels kontinuierlicher Dosierung erfolgen, wobei die Nachbehandlung unter Polymerisationsbedingungen bei einer Temperatur von 20°C bis 95°C, vorzugsweise 60°C bis 95°C durchgeführt wird. Nach der Zugabe der Alkylester und Vinylester wird die Polymerisation solange weitergeführt bis kein Monomerumsatz mehr zu erkennen ist, üblicherweise über einen Zeitraum von 15 bis 60 Minuten.

Gegebenenfalls kann als letzter Verfahrensschritt eine Behandlung mittels der üblichen, im Stand der Technik beschriebenen, physikalischen und chemischen Nachbehandlungs-Methoden angeschlossen werden. Beispielsweise durch chemische Methoden wie Nachpolymerisation. Vorzugsweise mittels Redoxinitiatoren wie beispielsweise einem tert. Butylhydroperoxid/Rongalith-Gemisch und der Zugabe äquimolarer Mengen Butylacrylat, bezogen auf Reststyrol. Alternativ dazu oder zusätzlich können physikalische Methoden wie Destillation unter vermindertem Druck (Vakuumbehandlung) oder Durchleiten von Inertgasen wie Stickstoff oder Wasserdampf angewendet werden.

Am meisten bevorzugt wird ein Verfahren bei dem
a) gegen Ende der Polymerisation, wenn der Gesamtgehalt der wässrigen Polymerisatdispersion an freien Monomeren im Bereich ≥ 0 bis ≤ 20 Gew.-% liegt, zunächst 0.01 bis 15.0 Gew.-% ein oder mehrere Monomere aus der Gruppe der verzweigten oder unverzweigten Alkylester mit 1 bis 8 C-Atomen im Alkylrest von einfach ungesättigten Mono- oder Dicarbonsäuren zugegeben werden und daran anschließend
b) wenn der Gesamtgehalt der wässrigen Polymerisatdispersion an freien Monomeren im Bereich ≥ 0 bis ≤ 500 ppm liegt, 0.01 bis 15.0 Gew.-% ein oder mehrere Monomere aus der Gruppe der Vinylester verzweigter oder unverzweigter aliphatischer Carbonsäuren mit 1 bis 10 C-Atomen zugegeben werden, wobei die Angaben in Gew.-% auf den Polymerisatgehalt der Dispersion und die Angaben in ppm auf das Geamtgewicht der Dispersion bezogen sind.

Vorzugsweise erfolgt die Zugabe der Alkylester in Schritt a), wenn der Gesamtgehalt der wässrigen Polymerisatdispersion an freien Monomeren, bezogen auf den Polymerisatgehalt der Dispersion, bis auf den Bereich 5 bis 15 Gew.-% abgesunken ist, was einem Umsatz von 85 bis 95 % entspricht. Die Zugabe kann batchweise oder mittels kontinuierlicher Dosierung erfolgen, wobei die Nachbehandlung in Schritt a) unter Polymerisationsbedingungen bei einer Temperatur von 20°C bis 95°C, vorzugsweise 60°C bis 95°C durchgeführt wird. Nach der Zugabe der Alkylester wird die Polymerisation solange weitergeführt bis kein Monomerumsatz mehr zu erkennen ist, üblicherweise über einen Zeitraum von 15 bis 60 Minuten.

Gegebenenfalls kann in dieser Phase des Verfahrens, zwischen Schritt a) und b) der Gehalt an Restmoncmer, insbesondere Reststyrol, mittels der üblichen, im Stand der Technik beschriebenen, physikalischen und chemischen Nachbehandlungs-Methoden weiter reduziert werden. Beispielsweise durch chemische Methoden wie Nachpolymerisation. Vcrzugsweise mittels Redoxinitiatoren wie beispielsweise einem tert. Butylhydroperoxid/Rongalith-Gemisch und der Zugabe äquimolarer Mengen Butylacrylat, bezogen auf Reststyrol. Alternativ dazu oder zusätzlich kann mittels physikalischer Methoden wie Destillation unter vermindertem Druck (Vakuumbehandlung) oder Durchleiten von Inertgasen wie Stickstoff oder Wasserdampf der Restmonomergehalt abgesenkt werden. Bevorzugt wird durch Vakuumbehandlung der Restmonomergehalt auf den gewünschten Wert von maximal 500 ppm, vorzugsweise ≥ 0 bis 50 ppm, abgesenkt werden.

Die Vinylester-Zugabe erfolgt in der am meisten bevorzugten Ausführungsform im Anschluß zu Schritt a), wenn der Gehalt der wässrigen Polymerisatdispersion an freiem Vinylaromat und 1,3-Dien, bezogen auf den Polymerisatgehalt der Dispersion, bis auf den Bereich ≥ 0 bis 500 ppm, bevorzugt ≥ 0 bis 50 ppm, abgesunken ist. Dazu wird in Schritt b) der Vinylesteranteil, gegebenenfalls zusammen mit weiterem Initiator, zugegeben. Die Zugabe kann batchweise oder mittels kontinuierlicher Dosierung erfolgen. Falls weiterer Initiator zugegeben wird, sind sowohl die üblichen thermischen Radikalinitiatoren als auch Redoxinitiator-Kombinationen, wie oben für die Emulsionspolymerisation beschrieben, geeignet. Die eingesetzte Menge an Initiator beträgt dabei dann 1 bis 10 Gew.-%, und falls dieser in Kombination mit einem Reduktionsmittel eingesetzt wird, beträgt dessen Menge ebenfalls 1 bis 10 Gew.-%, jeweils bezogen auf die Zugabemenge an Vinylester. Die Nachbehandlung in Schritt b) wird bei einer Temperatur von 20°C bis 95°C, vorzugsweise 60°C bis 95°C und solange durchgeführt bis kein Monomerumsatz mehr zu erkennen ist, üblicherweise über einen Zeitraum von 15 bis 60 Minuten.

Gegebenenfalls noch vorhandene Reste von Vinylester können im Anschluß an Schritt b) mittels Nachpolymerisation, vorzugsweise in Gegenwart eines Redoxinitiator-Gemisches, beispielsweise einem tert. Butylhydroperoxid/Rongalith-Gemisch verringert werden, und/oder durch physikalische Methoden wie Destillation unter vermindertem Druck oder Durchleiten von Inertgas, beispielsweise durch Strippen mit Wasserdampf, entfernt werden.

Die damit erhältlichen wässrigen Dispersionen haben einen Feststoffgehalt von 30 bis 75 Gew.-%, vorzugsweise von 40 bis 65 Gew.-%.

Zur Herstellung der in Wasser redispergierbaren Polymerpulver werden die wässrigen Dispersionen getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zweioder Mehrstoffdüsen oder mit einer rotierenden Scheibe erfolgen kann. Die Austrittstemperatur wird im allgemeinen im Bereich von 55°C bis 100°C, bevorzugt 70°C bis 90°C, je nach Anlage, Tg des Harzes und gewünschtem Trocknungsgrad, gewählt.

Die Gesamtmenge an Schutzkolloid vor dem Trocknungsvorgang soll vorzugsweise mindestens 10 Gew%, bezogen auf den Polymeranteil betragen. Zur Gewährleistung der Redispergierbarkeit ist es in der Regel erforderlich der Dispersion vor der Trocknung weitere Schutzkolloide als Verdüsungshilfe zuzugeben. In der Regel wird die Verdüsungshilfe in einer Menge von 5 bis 25 Gew.-%, bezogen auf die polymeren Bestandteile der Dispersion, eingesetzt.

Geeignete Verdüsungshilfen sind teilverseifte Polyvinylacetate; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden als Verdüsungshilfe teilverseifte Polyvinylacetate mit einem Hydrolysegrad von 80 bis 95 Mol-%, einer Höppler-Viskosität von 1 bis 30 mPas, welche gegebenenfalls mit Isopropenylacetat- oder Vinylethereinheiten modifiziert sein können.

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesonders bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, versetzt werden. Beispiele für Antiblockmittel sind Ca- bzw. Mg-Carbonat, Talk, Gips, Kieselsäure, Silicate mit Teilchengrößen vorzugsweise im Bereich von 10 nm bis 10 µm.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Überraschenderweise wurde gefunden, daß die Desodorierung der Geruchsemittenten sowohl in der wässrigen als auch in der Polymerphase der Dispersion stattfindet. Vorteilhafterweise reichen bereits geringe Mengen an Alkylester und Vinylester für eine desodorierende Wirkung aus, so daß die anwendungstechnischen Eigenschaften der wässrigen Polymerdispersion durch den Zusatz im allgemeinen nicht beeinträchtigt wird. Es wird ebenso weder die Stabilität der dispersiven Verteilung noch die Eignung der Dispersion für eine anschließende Sprühtrocknung beeinträchtigt.

Die Polymerdispersionen und die daraus durch Trocknung hergestellten Dispersionspulver mit verringerter Geruchsemission können in üblicher, dem Fachmann bekannten Weise zu technischen Produkten, wie z.B. als Rezepturbestandteil in Verbindung mit anorganischen, hydraulisch abbindenden Bindemitteln in Bauklebern, Putzen, Spachtelmassen, Fußbodenspachtelmassen, Fugenmörtel, Gips und Farben sowie als Alleinbindemittel für Beschichtungsmittel und Klebemittel sowie als Beschichtungsund Bindemittel für Textilien und Papier eingesetzt werden.

Die im folgenden aufgeführten Beispiele sollen die Erfindung veranschaulichen, ohne sie jedoch einzuschränken.

### Beispiel 1:

In einem Druckgefäß (N₂-gespült) wurden 6.1 kg Wasser, 24.6 g Na-Laurylsulfat, 70.4 g Natriumpyrophosphat, 1.4 g Na-Ethylendiamintetraacetat, 107.8 g Acrylamid, 140.8 g Acrylsäure, 140.8 g Fumarsäure, 0.56 kg Styrol, 30.7 g tert.-Dodecylmercaptan, 0.48 kg 1,3-Butadien und 49.3 g Natriumpersulfat vorgelegt und unter Rühren auf 80°C erwärmt.
Nach dem Anspringen der Polymerisation wurden ein homogenes Gemisch aus 2.7 kg Butadien, 3.2 kg Styrol und 34.1 g tert.-Dodecylmercaptan (Zulauf A) und.eine wässrige Lösung bestehend aus 553 g Wasser und 35.2 g Natriumpersulfat (Zulauf B) zeitgleich beginnend innerhalb 4 h unter Aufrechterhaltung der 80°C dem Polymerisationsgefäß räumlich getrennt zugeführt. Nach Beendigung der Zuläufe A und B betrug der Polymerisationsumsatz 92 %.

Zu diesem Zeitpunkt wurde die Zugabe von 280 g Butylacrylat (Zulauf C) gestartet und innerhalb 20 min dem Polymerisationsgemisch zugeführt. Nach Beendigung des Zulaufs C wurde das Reaktionsgemisch weitere 2 h bei 80°C gerührt, dann auf 60°C abgekühlt und am Vakuum von restlichem Butadien befreit. Der Polymerisationsumsatz betrug > 99.5 Gew.-%.
Nach Beendigung der Vakuumbehandlung wurden bei 60°C innerhalb von 15 min 280 g Vinylacetat (Zulauf D) der Polymerdispersion zugegeben. Anschließend wurden zeitgleich eine wässrige Lösung bestehend aus 150 g Wasser und 17 g tert-Butylhydroperoxid (Zulauf E) und eine wässrige Lösung bestehend aus 150 g Wasser und 17 g Rongalith (Zulauf F) zeitgleich beginnend und innerhalb 90 min dem Polymerisationsgefäß räumlich getrennt zugeführt. Danach wurde der pH-Wert der Dispersion mittels einer 10 Gew.-%igen Natronlauge auf 6.5 eingestellt und dann auf Raumtemperatur abgekühlt.
Es wurde eine wässrige Polymerisatdispersion erhalten, deren Feststoffgehalt 52.5 Gew.-% betrug. Der bei der Polymerisation gebildete Koagulatanteil lag unter 0.5 Gew.-%, bezogen auf die Menge der zu polymerisierenden Monomeren. Die Glasübergangstemperatur der Verfilmung der wässrigen Polymerisatdispersion betrug -5°C.

### Beispiel 2:

In einem Rührautoklaven mit ca. 16 l Inhalt wurden 3.4 l entionisiertes Wasser und 3.85 kg einer 20 Gew.-%igen wässrigen Lösung eines teilverseiften Polyvinylacetats mit einem Hydrolysegrad von 88 Mol%, einer Höpplerviskosität der 4 %-igen Lösung von 4 mPas (DIN 53015, Methode nach Höppler bei 20°C), vorgelegt. Der pH-Wert wurde mit 10 Gew.%-iger Ameisensäure auf 4.0 bis 4.2 eingestellt. Anschließend wurde evakuiert, mit Stickstoff gespült, erneut evakuiert und ein Gemisch aus 4.54 kg Styrol, 2.40 kg 1,3-Butadien und 64.8 g tert.-Dodecylmercaptan eingesaugt. Nach Aufheizen auf 80°C wurde die Polymerisation durch gleichzeitiges Einfahren von zwei Katalysatorlösungen gestartet, von denen die erste aus 197 g entionisiertem Wasser und 66 g einer 40 %-igen wässrigen tert.-Butylhydroperoxidlösung und die andere aus 508 g entionisiertem Wasser und 57 g Natriumformaldehydsulfoxylat bestand. Die Dosierung der Peroxidlösung erfolgte mit einer Zulaufgeschwindigkeit von 44 ml/h, die Natriumformaldehydsulfoxylat-Lösung wurde mit 94 ml/h zudosiert. 3.5 Stunden nach Polymerisationsbeginn waren die vorgelegten Monomere zu 90 % umgesetzt.
Zu diesem Zeitpunkt begann die Dosierung von 315 g Butylacrylat mit einer Rate von 630 g/h. 2 Stunden nach Beendigung der Butylacrylatdosierung wurden die Initiatordosierungen gestoppt, der Reaktorinhalt auf 60°C abgekühlt und noch eine Stunde am Vakuum von restlichem Butadien befreit. Der Polymerisationsumsatz betrug > 99.5 Gew.-%.
Nach Beendigung der Vakuumbehandlung wurde bei 60°C innerhalb von 15 Minuten 280 g Vinylacetat der Polymerdispersion zugegeben. Anschließend wurden eine wässrige Lösung bestehend aus 150 g Wasser und 17 g tert-Butylhydroperoxid sowie eine wässrige Lösung bestehend aus 150 g Wasser und 17 g Rongalith zeitgleich beginnend innerhalb 90 min dem Poylmerisationsgefäß räumlich getrennt zugeführt.
Es wurde eine wässrige Polymerisatdispersion erhalten, deren Feststoffgehalt 52.6 Gew.-% betrug. Der bei der Polymerisation gebildete Koagulatanteil lag unter 0.5 Gew.-%, bezogen auf die Menge der zu polymerisierenden Monomeren. Die Glasübergangstemperatur der Verfilmung der wässrigen Polymerisatdispersion betrug 0°C.
400 Gew.-Teile der Dispersion wurden mit 200 Gew.-Teilen einer 10.3 Gew.-%igen Lösung eines Polyvinylalkohols (teilverseiftes Polyvinylacetat, Hydrolysegrad 88 Mol-%, Viskosität der 4 %-igen Lösung 13 mPas), 0.84 Gew.-Teilen Entschäumer und 135 Gew.-Teilen Wasser versetzt und gründlich gemischt. Die Dispersion wurde durch eine Zweistoffdüse versprüht. Als Verdüsungskomponente diente auf 4 bar vorgepreßte Luft, die gebildeten Tropfen wurden mit auf 125°C erhitzter Luft im Gleichstrom getrocknet. Das erhaltene trockene Pulver wurde mit 10 % handelsüblichem Antiblockmittel (Gemisch aus Calcium-Magnesium-Carbonat und Magnesiumhydrosilikat) versetzt.

### Vergleichsbeispiel 3:

Die Herstellung der Dispersion erfolgte analog Beispiel 1, wobei auf die Zugabe von Vinylacetat verzichtet wurde.
Es wurde eine wässrige Polymerisatdispersion erhalten, deren Feststoffgehalt 52.0 Gew.-% betrug. Der bei der Polymerisation gebildete Koagulatanteil lag unter 0.5 Gew.-%, bezogen auf die Menge der zu polymerisierenden Monomeren. Die Glasübergangstemperatur der Verfilmung der wässrigen Polymerisatdispersion betrug -6°C.

### Vergleichsbeispiel 4:

Die Herstellung der Dispersion erfolgte analog Beispiel 2, wobei auf die Zugabe von Vinylacetat verzichtet wurde.
Es wurde eine wässrige Polymerisatdispersion erhalten, deren Feststoffgehalt 52.0 Gew.-% betrug. Der bei der Polymerisation gebildete Koagulatanteil lag unter 0.5 Gew.-%, bezogen auf die Menge der zu polymerisierenden Monomeren. Die Glasübergangstemperatur der Verfilmung der wässrigen Polymerisatdispersion betrug -1°C. Alle anderen Maßnahmen zur Herstellung des Dispersionspulvers entsprachen Beispiel 2.

### Vergleichsbeispiel 5:

Die Herstellung der Dispersion erfolgte analog Beispiel 1, wobei weder Butylacrylat noch Vinylacetat zugegeben wurde, sondern nur die Vakuumbehandlung durchgeführt wurde.
Es wurde eine wässrige Polymerisatdispersion erhalten, deren Feststoffgehalt 51.3 Gew.-% betrug. Der bei der Polymerisation gebildete Koagulatanteil lag unter 0.5 Gew.-%, bezogen auf die Menge der zu polymerisierenden Monomeren. Die Glasübergangstemperatur der Verfilmung der wässrigen Polymerisatdispersion betrug -4°C.

### Vergleichsbeispiel 6:

Die Herstellung der Dispersion erfolgte analog Beispiel 2, wobei weder Butylacrylat noch Vinylacetat zugegeben wurde, sondern nur die Vakuumbehandlung durchgeführt wurde.
Es wurde eine wässrige Polymerisatdispersion erhalten, deren Feststoffgehalt 51.0 Gew.-% betrug. Der bei der Polymerisation gebildete Koagulatanteil lag unter 0.5 Gew.-%, bezogen auf die Menge der zu polymerisierenden Monomeren. Die Glasübergangstemperatur der Verfilmung der wässrigen Polymerisatdispersion betrug -2°C.
Alle anderen Maßnahmen zur Herstellung des Dispersionspulvers entsprachen Beispiel 2.

### Prüfung der Polymerdispersionen und Redispersionspulver:

Beurteilung des Geruchs an Dispersionsfilmen von Dispersionen und Redispersionen der Dispersionspulver :
Zur Herstellung der Filme wurden durch Redispergieren des hergestellten Dispersionspulvers in Wasser bzw. durch Verdünnen der Polymerdispersionen mit Wasser ca. 30 %-ige, wässrige Dispersionen erzeugt. Als Referenzsubstanzen dienten 30 %-ige, wässrige Dispersionen bzw. Redispersionen der Dispersionspulver aus den Vergleichsbeispielen.
Die Dispersionen wurden zur Erzeugung von Filmen auf eine Silikonkautschukplatte gegossen und anschließend 24 Stunden bei 23°C getrocknet. Die so erhaltenen Filme vom Format 15 cm x 10 cm wurden in eine auf 75°C vorgeheizte 250ml-Weithalsglasflasche mit Schraubdeckel gefüllt und 5 Minuten in einen auf 75°C geheizten Trockenschrank gestellt. Anschließend ließ man auf Raumtemperatur abkühlen und den Geruch von acht Testpersonen anhand einer Notenskala von 1 bis 6 (Geruchsintensität) beurteilen. Die Ergebnisse der Geruchsprüfung sind in Tabelle 1 wiedergegeben:

**Tabelle 1**

| Ergebnisse der Geruchsprüfung | | | | | | | | | |
|---|---|---|---|---|---|---|---|---|---|
| Beispiel | 1 (D) | 2 (D) | 2 (P) | V3 (D) | V4 (D) | V5 (D) | V5 (P) | V6 (D) | V6 (P) |
| Intensität => | | | | | | | | | |
| Testperson 1 | 1 | 2 | 2 | 3 | 2 | 4 | 4 | 5 | 5 |
| Testperson 2 | 2 | 1 | 1 | 3 | 3 | 4 | 5 | 4 | 6 |
| Testperson 3 | 1 | 2 | 2 | 3 | 3 | 5 | 5 | 5 | 5 |
| Testperson 4 | 2 | 1 | 2 | 4 | 2 | 6 | 5 | 6 | 5 |
| Testperson 5 | 1 | 1 | 1 | 3 | 2 | 4 | 6 | 4 | 6 |
| Testperson 6 | 2 | 1 | 1 | 3 | 3 | 6 | 5 | 5 | 6 |
| Testperson 7 | 1 | 2 | 1 | 2 | 3 | 5 | 5 | 6 | 5 |
| Testperson 8 | 2 | 2 | 2 | 3 | 2 | 5 | 6 | 6 | 6 |
| D = Dispersion; P = Redispersionspulver | | | | | | | | | |

Die Ergebnisse von Tabelle 1 zeigen, daß mit der erfindungsgemäßen Vorgehensweise zur Desodorierung von Polymerdispersionen und Dispersionspulver eine deutliche Verminderung der Geruchsbelästigung erhalten wird. Der Vergleich von Beispiel 1 mit den Vergleichsbeispielen 3 und 5 bzw. der Vergleich von Beispiel 2 mit den Vergleichsbeispielen 4 und 6 zeigt, daß bei der Nachbehandlung mittels der Kombination von Alkylester und Vinylester eine deutlich bessere Geruchsminimierung resultiert, als bei der alleinigen Nachbehandlung mit Alkylester (V.bsp. 3 und 4) bzw. der noch schlechteren Ergebnisse, falls nur mittels Vakuumbehandlung gearbeitet wurde (V.bsp. 5/6).

Bestimmung des Absitzverhaltens der Pulver (Röhrenabsitz): Zur Bestimmung des Absitzverhaltens wurden jeweils 50 g des Dispersionspulvers in 50 ml Wasser redispergiert, danach auf 0.5 % Festgehalt verdünnt und die Absitzhöhe an Feststoff von 100 ml dieser Redispersion in eine graduierte Röhre gefüllt und das Absetzen nach 1 Stunde und 24 Stunden gemessen. Die Testergebnisse sind in Tabelle 2 zusammengefaßt.

### Bestimmung der Blockfestigkeit:

Zur Bestimmung der Blockfestigkeit wurde das Dispersionspulver in ein Eisenrohr mit Verschraubung gefüllt und danach mit einem Metallstempel belastet. Nach Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulver bestimmt. Die Blockstabilität wurde wie folgt klassifiziert:
1 = sehr gute Blockstabilität
2 = gute Blockstabilität
3 = befriedigende Blockstabilität
4 = nicht blockstabil, Pulver nach Zerdrücken nicht mehr rieselfähig.

Die Prüfergebnisse sind in Tabelle 2 zusammengefaßt.

**Tabelle 2**

| Beispiel | Röhrenabsitz 1 h/24 h [cm] | Blockfestigkeit |
|---|---|---|
| 2 | 0.1 / 0.4 | 1 |
| V5 | 0.1 / 0.6 | 1 |
| V6 | 0.2 / 0.5 | 2 |

Die Ergebnisse in Tabelle 2 zeigen, daß die Pulverqualität durch die desodorierende Behandlung nicht in Mitleidenschaft gezogen wird.

## Patentansprüche

1. Verfahren zur Minderung der Geruchsemission wässriger Vinylaromat-1,3-Dien-Copolymerisatdispersionen und daraus durch Trocknung erhältlicher Redispersionspulver, durch Emulsionspolymerisation eines Gemisches enthaltend mindestens einen Vinylaromaten und mindestens ein 1,3-Dien in Gegenwart einer oder mehrerer oberflächenaktiven Substanzen und gegebenenfalls Trocknung der damit erhaltenen Polymerdispersion, **dadurch gekennzeichnet**, daß
gegen Ende der Polymerisation, wenn der Gesamtgehalt der wässrigen Polymerisatdispersion an freien Monomeren im Bereich ≥ 0 bis ≤ 20 Gew.-% liegt, 0.01 bis 15.0 Gew.-% ein oder mehrere Monomere aus der Gruppe der verzweigten oder unverzweigten Alkylester mit 1 bis 8 C-Atomen im Alkylrest von einfach ungesättigten Mono- oder Dicarbonsäuren, und 0.01 bis 15.0 Gew.-% ein oder mehrere Monomere aus der Gruppe der Vinylester verzweigter oder unverzweigter aliphatischer Carbonsäuren mit 1 bis 10 C-Atomen in einem Schritt oder in zwei aufeinanderfolgenden Schritten zugegeben werden , und die Angaben in Gew.-% jeweils auf den Polymerisatgehalt der Dispersion bezogen sind.

2. Verfahren nach Anspruch 1, **dadurch gekennzeichnet**, daß
a) gegen Ende der Polymerisation, wenn der Gesamtgehalt der wässrigen Polymerisatdispersion an freien Monomeren im Bereich ≥ 0 bis ≤ 20 Gew.-% liegt, zunächst 0.01 bis 15.0 Gew.-% ein oder mehrere Monomere aus der Gruppe der verzweigten oder unverzweigten Alkylester mit 1 bis 8 C-Atomen im Alkylrest von einfach ungesättigten Mono- oder Dicarbonsäuren zugegeben werden und daran anschließend
b) wenn der Gesamtgehalt der wässrigen Polymerisatdispersion an freien Monomeren im Bereich ≥ 0 bis ≤ 500 ppm liegt, 0.01 bis 15.0 Gew.-% ein oder mehrere Monomere aus der Gruppe der Vinylester verzweigter oder unverzweigter aliphatischer Carbonsäuren mit 1 bis 10 C-Atomen zugegeben werden, wobei die Angaben in Gew.-% auf den Polymerisatgehalt der Dispersion und die Angaben in ppm auf das Gesamtgewicht der Dispersion bezogen sind.

3. Verfahren nach Anspruch 1 oder 2, **dadurch gekennzeichnet**, daß 20 bis 80 Gew.-% Vinylaromat und 20 bis 80 Gew.-% 1,3-Dien, gegebenenfalls noch 0.1 bis 30 Gew.-% weitere Monomere, copolymerisiert werden, wobei sich die Angaben in Gew.-% jeweils auf 100 Gew.-% aufaddieren.

4. Verfahren nach Anspruch 1 bis 3, **dadurch gekennzeichnet**, daß als Alkylester ein oder mehrere Alkylester der Acrylsäure, Methacrylsäure, Fumarsäure, Maleinsäure oder Itaconsäure eingesetzt werden.

5. Verfahren nach Anspruch 1 bis 4, **dadurch gekennzeichnet**, daß als Vinylester ein oder mehrere Vinylester aus der Gruppe Vinylacetat, Vinylpivalat, Vinylethylhexanoat, Vinylester von alpha-verzweigten Monocarbonsäuren mit 9 bis 10 C-Atomen eingesetzt werden.

6. Verfahren nach Anspruch 1 bis 5, **dadurch gekennzeichnet**, daß die Zugabe der Alkylester batchweise oder mittels kontinuierlicher Dosierung erfolgt, und bei einer Temperatur von 20°C bis 95°C die Polymerisation solange weitergeführt bis kein Monomerumsatz mehr zu erkennen ist.

7. Verfahren nach Anspruch 2 bis 5, **dadurch gekennzeichnet**, daß der Vinylesteranteil zusammen mit weiterem Initiator zugegeben wird und die Nachbehandlung in Schritt b) bei einer Temperatur von 20°C bis 95°C solange durchgeführt wird bis kein Monomerumsatz mehr zu erkennen ist.

8. Verfahren nach Anspruch 2 bis 7, **dadurch gekennzeichnet**, daß zwischen Schritt a) und b) der Gehalt an Restmonomer mittels Nachpolymerisation und/oder mittels physikalischer Methoden wie Destillation unter vermindertem Druck, Durchleiten von Inertgasen auf den gewünschten Wert von maximal 500 ppm abgesenkt wird.

9. Verfahren nach Anspruch 2 bis 8, **dadurch gekennzeichnet**, daß nach Abschluß von Schritt b) gegebenenfalls noch vorhandene Reste von Vinylester mittels Nachpolymerisation und/oder durch physikalische Methoden wie Destillation unter vermindertem Druck oder Durchleiten von Inertgas entfernt werden.

10. Verfahren nach Anspruch 1 bis 9, **dadurch gekennzeichnet**, daß die damit erhaltenen wässrigen Dispersionen zur Herstellung von in Wasser redispergierbaren Polymerpulver mittels Wirbelschichttrocknung, Gefriertrocknung oder Sprühtrocknung getrocknet werden.

11. Verwendung der in einem Verfahren gemäß Anspruch 1 bis 10 erhältlichen wässrigen Dispersionen oder in Wasser redispergierbaren Polymerpulvern als Rezepturbestandteil in Verbindung mit anorganischen, hydraulisch abbindenden Bindemitteln in Bauklebern, Putzen, Spachtelmassen, Fußbodenspachtelmassen, Fugenmörtel, Gips und Farben.

12. Verwendung der in einem Verfahren gemäß Anspruch 1 bis 10 erhältlichen wässrigen Dispersionen oder in Wasser redispergierbaren Polymerpulvern als Alleinbindemittel für Beschichtungsmittel und Klebemittel.

13. Verwendung der in einem Verfahren gemäß Anspruch 1 bis 10 erhältlichen wässrigen Dispersionen oder in Wasser redispergierbaren Polymerpulvern als Beschichtungs- und Bindemittel für Textilien und Papier.

## Claims

1. Process for reducing the odour emission of aqueous vinylaromatic/1,3-diene copolymer dispersions and of redispersion powders obtainable therefrom by drying, by emulsion polymerization of a mixture containing at least one vinylaromatic and at least one 1,3-diene in the presence of one or more surfactant substances and optionally drying of the polymer dispersion obtained thereby, **characterized in that** 0.01 to 15.0% by weight of one or more monomers from the group consisting of the branched or straight-chain alkyl esters having 1 to 8 C atoms in the alkyl radical of monounsaturated mono- or dicarboxylic acids and 0.01 to 15.0% by weight of one or more monomers from the group consisting of the vinyl esters of branched or straight-chain aliphatic carboxylic acids having 1 to 10 C atoms are added in one step or in two successive steps towards the end of the polymerization, when the total content of free monomers in the aqueous polymer dispersion is in the range from ≥0 to ≤20% by weight, and the data in % by weight are based in each case on the polymer content of the dispersion.

2. Process according to Claim 1, **characterized in that**
a) towards the end of the polymerization, when the total content of free monomers in the aqueous polymer dispersion is in the range from ≥0 from ≤20% by weight, first 0.01 to 15.0% by weight of one or more monomers from the group consisting of the branched or straight-chain alkyl esters having 1 to 8 C atoms in the alkyl radical of monounsaturated mono- or dicarboxylic acids are added and thereafter
b) when the total content of free monomers in the aqueous polymer dispersion is in the range from ≥0 to ≤500 ppm, 0.01 to 15.0% by weight of one or more monomers from the group consisting of the vinyl esters of branched or straight-chain aliphatic carboxylic acids having 1 to 10 C atoms are added, the data in % by weight being based on the polymer content of the dispersion and the data in ppm on the total weight of the dispersion.

3. Process according to Claim 1 or 2, **characterized in that** 20 to 80% by weight of vinylaromatic and 20 to 80% by weight of 1,3-diene, optionally also 0.1 to 30% by weight of further monomers, are copolymerized, the data in % by weight adding up in each case to 100% by weight.

4. Process according to any of Claims 1 to 3, **characterized in that** the alkyl esters used are one or more alkyl esters of acrylic acid, methacrylic acid, fumaric acid, maleic acid or itaconic acid.

5. Process according to any of Claims 1 to 4, **characterized in that** the vinyl esters used are one or more vinyl esters from the group consisting of vinyl acetate, vinyl pivalate, vinyl ethylhexanoate, and vinyl esters of alpha-branched monocarboxylic acids having 9 to 10 C atoms.

6. Process according to any of Claims 1 to 5, **characterized in that** the addition of the alkyl esters is carried out batchwise or by means of continuous metering, and the polymerization is continued at a temperature of 20°C to 95°C until monomer conversion is no longer detectable.

7. Process according to any of Claims 2 to 5, **characterized in that** the vinyl ester fraction is added together with further initiator, and the aftertreatment in step b) is carried out at a temperature of 20°C to 95°C until monomer conversion is no longer detectable.

8. Process according to any of Claims 2 to 7, **characterized in that**, between step a) and b), the content of residual monomers is reduced to the desired value of riot more than 500 ppm by means of post polymerization and/or by means of physical methods, such as distillation under reduced pressure or passage of inert gases.

9. Process according to any of Claims 2 to 8, **characterized in that**, after completion of step b), any vinyl ester residues present are removed by means of post polymerization and/or by physical methods, such as distillation under reduced pressure or passage of inert gas.

10. Process according to any of Claims 1 to 9, **characterized in that** the aqueous dispersions obtained thereby are dried by means of fluidized-bed drying, freeze-drying or spray-drying for the preparation of polymer powders redispersible in water.

11. Use of the aqueous dispersions or water-redispersible polymer powders obtainable according to any of Claims 1 to 10, as a formulation component in combination with inorganic, hydraulically setting binders in construction adhesives, renders, filling compounds, floor filling compounds, joint mortars, plaster and paints

12. Use of the aqueous dispersions or water-redispersible polymer powders obtainable according to any of Claims 1 to 10, as sole binders for coating materials and adhesives.

13. Use of the aqueous dispersions or water-redispersible polymer powders obtainable according to any of Claims 1 to 10, as coating materials and binders for textiles and paper.

## Revendications

1. Procédé pour réduire l'émission d'odeurs de dispersions aqueuses de copolymère d'aromate de vinyle et de 1,3-diène, et de poudres de redispersion pouvant être obtenues à partir de celles-ci par séchage, par polymérisation en émulsion d'un mélange contenant au moins un aromate de vinyle et au moins un 1,3-diène en présence d'une ou de plusieurs substances tensioactives et, le cas échéant, séchage de la dispersion de polymères ainsi obtenue, **caractérisé en ce que** vers la fin de la polymérisation, lorsque la teneur totale en monomères libres dans la dispersion aqueuse de polymère est située dans la plage de ≥ 0 à ≤ 20% en poids, on ajoute 0,01 à 15,0% en poids d'un ou de plusieurs monomères du groupe des esters alkyliques ramifiés ou non ramifiés, comprenant 1 à 8 atomes de carbone dans le radical alkyle, d'acides monocarboxyliques ou dicarboxyliques monoinsaturés et 0,01 à 15,0% en poids d'un ou de plusieurs monomères du groupe des esters vinyliques d'acides carboxyliques aliphatiques ramifiés ou non ramifiés comprenant 1 à 10 atomes de carbone en une étape ou en deux étapes consécutives et les indications en % en poids se rapportant à chaque fois à la teneur en polymère de la dispersion.

2. Procédé selon la revendication 1, caractérisé
a) en ce que, vers la fin de la polymérisation, lorsque la teneur totale en monomères libres dans la dispersion aqueuse de polymère est située dans la plage de ≥ 0 à ≤ 20% en poids, on ajoute d'abord 0,01 à 15,0% en poids d'un ou de plusieurs monomères du groupe des esters alkyliques ramifiés ou non ramifiés, comprenant 1 à 8 atomes de carbone dans le radical alkyle, d'acides monocarboxyliques ou dicarboxyliques monoinsaturés et, consécutivement
b) lorsque la teneur tctale en monomères libres dans la dispersion aqueuse de polymère est située dans la plage de ≥ 0 à ≤ 500 ppm, on ajoute 0,01 à 15,0% en poids d'un ou de plusieurs monomères du groupe des esters vinyliques d'acides carboxyliques aliphatiques ramifiés ou non ramifiés comprenant 1 à 10 atomes de carbone, les indications en % en poids se rapportant à la teneur en polymère dans la dispersion et les indications en ppm au poids total de la dispersion.

3. Procédé selon la revendication 1 ou 2, **caractérisé en ce qu**'on copolymérise 20 à 80% en poids d'aromate de vinyle et 20 à 80% en poids de 1,3-diène, le cas échéant encore 0,1 à 30% en poids d'autres monomères, les indications en % en poids s'additionnant à chaque fois à 100% en poids.

4. Procédé selon les revendications 1 à 3, **caractérisé en ce qu**'on utilise comme ester d'alkyle un ou plusieurs esters alkyliques de l'acide acrylique, de l'acide méthacrylique, de l'acide fumarique, de l'acide maléique ou de l'acide itaconique.

5. Procédé selon les revendications 1 à 4, **caractérisé en ce qu**'on utilise comme ester de vinyle un ou plusieurs esters de vinyle du groupe acétate de vinyle, pivalate de vinyle, éthylhexanoate de vinyle, ester vinylique d'acides monocarboxyliques ramifiés en α comprenant 9 à 10 atomes de carbone.

6. Procédé selon les revendications 1 à 5, **caractérisé en ce que** l'addition des esters d'alkyle est réalisée en lots ou par un dosage continu et que la polymérisation est poursuivie à une température de 20°C à 95°C jusqu'à ce qu'on n'observe plus de conversion de monomère.

7. Procédé selon les revendications 2 à 5, **caractérisé en ce que** la proportion d'ester de vinyle est ajoutée avec de l'initiateur supplémentaire et que le post-traitement dans l'étape b) est réalisé à une température de 20°C à 95°C jusqu'à ce qu'on n'observe plus de conversion de monomère.

8. Procédé selon les revendications 2 à 7, **caractérisé en ce que** la teneur en monomère résiduel est abaissé entre l'étape a) et l'étape b), au moyen d'une post-polymérisation et/ou au moyen de méthodes physiques telles que la distillation sous pression réduite, le passage de gaz inertes, à la valeur souhaitée d'au maximum 500 ppm.

9. Procédé selon les revendications 2 à 8, **caractérisé en ce qu**'à la fin de l'étape b), des restes éventuellement présents d'ester de vinyle sont éliminés au moyen d'une post-polymérisation et/ou au moyen de méthodes physiques telles que la distillation sous pression réduite ou le passage d'un gaz inerte.

10. Procédé selon les revendications 1 à 9, **caractérisé en ce que** les dispersions aqueuses ainsi obtenues sont séchées par séchage dans un lit fluidisé, par lyophilisation ou séchage par pulvérisation pour la préparation de poudres polymères redispersibles dans de l'eau.

11. Utilisation des dispersions aqueuses ou des poudres polymères redispersibles dans de l'eau pouvant être obtenues dans un procédé selon les revendications 1 à 10 comme constituant de formulation en association avec des liants inorganiques qui durcissent hydrauliquement, dans des colles de construction, des enduits, des mastics, des mastics pour planchers, des mortiers pour joints, du plâtre et des colorants.

12. Utilisation des dispersions aqueuses ou des poudres polymères redispersibles dans de l'eau pouvant être obtenues selon les revendications 1 à 10 comme liant unique pour des agents de revêtement et des agents adhésifs.

13. Utilisation des dispersions aqueuses ou des poudres polymères redispersibles dans de l'eau pouvant être obtenues dans un procédé selon les revendications 1 à 10 comme agent de revêtement et liant pour des textiles et du papier.
